# EUROPEAN PATENT APPLICATION

(11) **EP 4 734 492 A1**
(43) Date of publication of application: **29.04.2026**
(21) Application number: 24925593.6
(22) Date of filing: 25.11.2024
(51) Int. Cl.: H04M 1/72412, H04W 4/80

(54) **DISPLAY METHOD, ELECTRONIC DEVICE AND COMPUTER STORAGE MEDIUM**

(30) Priority: 19.02.2024 CN 202410183535
(71) Applicant: Huawei Technologies Co., Ltd., Shenzhen, Guangdong 518129 (CN)
(72) Inventor: DING, Shijie, Shenzhen, Guangdong 518129 (CN); LU, Qi, Shenzhen, Guangdong 518129 (CN)
(74) Representative: Pfenning, Meinig & Partner mbB
(86) International application number: PCT/CN2024/134051
(87) International publication number: WO 2025/175855

(57) **Abstract**

This application provides a display method, an electronic device, and a computer storage medium. The method is applied to a first device, and the method includes: receiving a first near field communication NFC signal sent by a second device; obtaining a status of the first device; determining, based on the status of the first device, whether to display an NFC card reading interface; displaying the NFC card reading interface when the first device is in a first state; and skipping displaying the NFC card reading interface when the first device is in a second state, where the first state is different from the second state, and the second state is related to the second device. When the first device is in the second state, a distance between the first device and the second device is less than or equal to a first distance, and a motion status of the first device relative to the second device is a stationary state. For example, the second state is a state in which the first device keeps close to the second device. Therefore, whether to display the NFC card reading interface can be selected based on status sensing of the device, to improve user experience and reduce power consumption of the device.

## Description

This application claims priority to Chinese Patent Application No. 202410183535.0, filed with the China National Intellectual Property Administration on February 19, 2024 and entitled "DISPLAY METHOD, ELECTRONIC DEVICE, AND COMPUTER STORAGE MEDIUM", which is incorporated herein by reference in its entirety.

### TECHNICAL FIELD

This application relates to the field of computer technologies, and in particular, to a display method, an electronic device, and a computer storage medium.

### BACKGROUND

Currently, a near field communication (near field communication, NFC) card reading area may be integrated into a center console of a vehicle. When a mobile terminal (for example, a mobile phone or a wearable device) is placed on the center console of the vehicle, the mobile terminal may display an NFC card reading interface, the vehicle may authenticate, in the NFC card reading area, an NFC vehicle key enabled by the mobile terminal, to implement a function of controlling (for example, starting) the vehicle without a physical vehicle key. However, when the mobile terminal remains placed on the center console of the vehicle, the mobile terminal may frequently display the NFC card reading interface, affecting user experience and causing high power consumption.

### SUMMARY

This application discloses a display method, an electronic device, and a computer storage medium, to select, based on status sensing of the device, whether to display an NFC card reading interface, so as to improve user experience and reduce power consumption of the device.

According to a first aspect, this application provides a display method, applied to a first device. The method includes: The first device (for example, a mobile terminal integrated with a near field communication NFC module, like a mobile phone) receives a first near field communication NFC signal sent by a second device (for example, a device integrated with an NFC card reading area, like a vehicle, a door, or a payment apparatus); the first device obtains a status of the first device, and determines, based on the obtained status of the first device, whether to display an NFC card reading interface; when the first device is in a first state, the first device displays a first interface (namely, the NFC card reading interface); and when the first device is in a second state, the first device displays a second interface. The first state is different from the second state, and the first interface is different from the second interface (that is, the second interface is not the NFC card reading interface). That the second state is related to the second device may be understood as that the second state is a state in which the first device performs NFC communication with the second device for a plurality of times.

In some examples, when the first device is in the second state, a distance between the first device and the second device is less than or equal to a first distance (for example, a distance between the first device and the NFC card reading area of the second device is less than or equal to the first distance), and a motion status of the first device relative to the second device is a stationary state, which may be understood that when the distance between the first device and the second device (for example, the NFC card reading area) is short and the first device and the second device remain relatively stationary, that is, when the first device keeps close to the second device (for example, the NFC card reading area), the first device is in the second state. Based on a feature of NFC, it may be learned that when the first device is close to the second device, an NFC communication process (for example, an NFC card reading process) is triggered. In addition, when the first device and the second device are close to each other, the second device sends an NFC signal to the first device for a plurality of times (for example, periodically), to trigger an NFC communication process. For example, when the first device is in the second state, the first device receives, at a first moment, a first NFC signal (used to wake up the NFC module of the first device) sent by the second device, and the first device receives, at a second moment after the first moment, the first NFC signal sent by the second device again.

In the foregoing method, after receiving the first NFC signal sent by the second device, the first device first obtains the status of the first device, and determines, based on the obtained status, whether to display the NFC card reading interface (displaying the NFC card reading interface may also be referred to as card pop-up for short). When the first device is in the second state, the first device does not display the NFC card reading interface, instead of displaying the NFC card reading interface as soon as the first NFC signal is received. When the first device is in the second state, it is considered that the first device is currently in a scenario in which the first device keeps close to the second device, instead of a "one-time card tap" scenario. Considering usage habits of most users, in the scenario in which the first device keeps close to the second device (that is, in the second state), a user usually does not want to perform NFC card reading for a plurality of times. Therefore, the first device does not display the NFC card reading interface when the first device is in the second state, so that a case in which the NFC card reading interface is frequently displayed because the first device receives the first NFC signal from the second device for a plurality of times can be avoided. This not only greatly improves user experience, but also reduces unnecessary device power consumption.

In a possible implementation, the second state includes a state in which the first device is wirelessly charged via the second device. In this case, the first device receives a wireless charging input of the second device. For example, the NFC card reading area and a wireless charging area of the second device are integrated together.

In the foregoing method, the first device may determine, based on whether the first device is currently in a wireless charging state, whether to display the NFC card reading interface. When the first device is in a state in which the first device is wirelessly charged via the second device, especially when the NFC card reading area and the wireless charging area of the second device are integrated together, the first device may consider that the user places the first device and the second device close to each other currently to perform wireless charging for the first device via the second device instead of performing NFC card reading. Therefore, the first device does not display the NFC card reading interface. In this way, a case in which the first device frequently displays the NFC card reading interface when the user performs wireless charging on the first device can be avoided, and false card pop-up when the first NFC signal is received can be more accurately suppressed. This greatly improves user experience, and resolves a problem that charging efficiency of the first device is reduced in this case.

In a possible implementation, the second state includes: The first device and the second device are connected in a first short-range communication manner, and a motion posture of the first device is a still posture. The first short-range communication manner is different from an NFC communication manner, for example, Bluetooth, ultra-wideband UWB, Sparklink, or infrared.

It may be understood that the motion posture of the first device is different from the motion status of the first device relative to the second device. The motion posture of the first device is a posture in which the first device moves in space in which the first device is located, for example, including a rotation posture, a translation posture, and a still posture (that is, keeping stationary), and the motion status of the first device relative to the second device represents whether the first device and the second device are relatively still or relatively moving.

In the foregoing method, the second state includes that the first device and the second device are connected in the first short-range communication manner. The first device may consider that the distance between the first device and the second device is short, so that a case in which the user of the first device performs NFC card reading at a place far away from the second device can be avoided. The second state further includes that the motion posture of the first device is the still posture. The first device may consider that the first device keeps stationary, so that a scenario in which the user performs "one-time card tap" via the first device can be avoided. Therefore, when the first device is in the second state, the NFC card reading interface is not displayed. In this way, when the first device keeps close to the second device, false card pop-up when the first NFC signal is received can be accurately suppressed. This can effectively improve user experience and reduce power consumption.

In a possible implementation, the second state includes: A first digital key of the first device is connected to the second device, and the motion posture of the first device is a still posture. A short-range communication manner and an NFC communication manner that correspond to the first digital key are different, and the first digital key is, for example, a Bluetooth key, a UWB key, a Sparklink key, or an infrared key.

In the foregoing method, the second state includes that the first digital key of the first device is connected to the second device. It may be considered that the first device has controlled the second device via the first digital key, or it may be understood that the second device has completed authentication (for example, card reading) on the first digital key. Therefore, an NFC card reading process does not need to be performed again. The second state further includes that the motion posture of the first device is a still posture. The first device may consider that the first device keeps stationary, so that a scenario in which the user performs "one-time card tap" via the first device can be avoided. Therefore, when the first device is in the second state, the NFC card reading interface is not displayed. In this way, when the first device keeps close to the second device, false card pop-up when the first NFC signal is received can be more accurately suppressed. This can effectively improve user experience and reduce power consumption.

In a possible implementation, after the first device receives the first NFC signal (for example, signaling of a contactless card standard ISO 14443-3 protocol) sent by the second device (for example, a door or a payment apparatus), when the first device is in the first state, the first device and the second device may perform an NFC key authentication process (including sending, by the first device, a second NFC signal to the second device). In addition, the first device may display the first interface (namely, the NFC card reading interface). The second NFC signal includes information about a first NFC key (for example, a door key or a payment key) of the first device, and the second NFC signal is used by the second device to authenticate the first NFC key. After the first device receives the first NFC signal sent by the second device, when the first device is in the second state, the first device does not perform an NFC key authentication process with the second device (that is, the first device does not send the information about the NFC key of the first device to the second device), and the first device may display the second interface (that is, does not display the NFC card reading interface).

In the foregoing method, after receiving the first NFC signal sent by the second device, the first device first obtains the status of the first device, and determines, based on the obtained status, whether to display the NFC card reading interface and whether to perform the NFC key authentication process. When the first device is in the second state, the NFC card reading interface is not displayed, and the NFC key authentication process is not performed, instead of displaying the NFC card reading interface and sending the information about the NFC key as soon as the first NFC signal is received. Therefore, a case in which the first device frequently displays the NFC card reading interface and sends the information about the NFC key for a plurality of times because the first device receives the first NFC signal from the second device for a plurality of times can be avoided. This can effectively reduce unnecessary signal transmission and greatly reduce unnecessary device power consumption.

In a possible implementation, after the first device receives the first NFC signal (for example, signaling of the contactless card standard ISO14443-3 protocol) sent by the second device (for example, a vehicle), the method further includes: The first device receives a third NFC signal (for example, signaling of an ISO14443-4 protocol) of the second device, where the third NFC signal includes a first identifier (for example, an application identifier AID); the first device obtains the status of the first device, and determines, based on the obtained status of the first device and whether an NFC key (which may also be understood as an NFC key related to the second device) corresponding to the first identifier is enabled, whether to display the NFC card reading interface and whether to perform an NFC key authentication process; when the first device is in the first state and/or has enabled a second NFC key (for example, a vehicle key) corresponding to the first identifier, the first device and the second device may perform an NFC key authentication process (including sending, by the first device, a fourth NFC signal to the second device), and the first device may display the first interface (namely, the NFC card reading interface), where the fourth NFC signal includes information about a third NFC key (for example, a vehicle key) of the first device, the fourth NFC signal is used by the second device to authenticate the third NFC key, the third NFC key is the second NFC key when the first device has enabled the second NFC key, and the third NFC is not the second NFC key (that is, the third NFC key is not corresponding to the first identifier) when the first device has not enabled the second NFC key; and when the first device is in the second state and has not enabled the NFC key corresponding to the first identifier, the first device does not perform an NFC key authentication process with the second device (that is, the first device does not send the information about the NFC key of the first device to the second device), and the first device may display the second interface (that is, does not display the NFC card reading interface).

In the foregoing method, when determining whether to display the NFC card reading interface and whether to perform the NFC key authentication process, the first device not only determines based on the status of the first device, but also determines based on whether the first device enables the NFC key (that is, the NFC key related to the second device) corresponding to the first identifier (provided by the second device), so as to accurately suppress false card pop-up and NFC is incorrectly authenticated when the first device has not enabled the NFC key related to the second device, effectively improve user experience, and reduce power consumption.

According to a second aspect, this application provides an electronic device, including a transceiver (including an NFC module), a processor, and a memory. The memory is configured to store a computer program, and the processor invokes the computer program, so that the electronic device performs the display method according to any one of the first aspect and the implementations of the first aspect.

According to a third aspect, this application provides a computer storage medium. The computer storage medium stores a computer program. When the computer program is executed by a processor, the display method provided in any one of the first aspect or the implementations of the first aspect is performed.

According to a fourth aspect, this application provides a computer program product. When the computer program product runs on a device, the device is enabled to perform the display method provided in any one of the first aspect or the implementations of the first aspect.

According to a fifth aspect, this application provides an electronic device. The electronic device includes the method or the apparatus for executing any aspect or any implementation of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, descriptions of technical features, technical solutions, or beneficial effects in this application do not necessarily refer to a same implementation. Further, the technical features, the technical solutions, and the beneficial effects described in this application may be combined in any appropriate manner. A person skilled in the art may understand that this application may be implemented without one or more specific technical features, technical solutions, or beneficial effect in a specific implementation. In another implementation, additional technical features and beneficial effects may be further identified in a specific implementation that does not reflect all implementations.

### BRIEF DESCRIPTION OF DRAWINGS

The following describes accompanying drawings used in this application.
FIG. 1 is a diagram of an architecture of a communication system according to this application;
FIG. 2 is a diagram of an architecture of another communication system according to this application;
FIG. 3 is a diagram of an architecture of still another communication system according to this application;
FIG. 4 is a diagram of a hardware structure of an electronic device according to this application;
FIG. 5 is a diagram of a software architecture of an electronic device according to this application;
FIG. 6A to FIG. 6C are a schematic flowchart of a display method according to this application;
FIG. 7A to FIG. 7C are a schematic flowchart of another display method according to this application;
FIG. 8A and FIG. 8B are a schematic flowchart of still another display method according to this application; and
FIG. 9 is a schematic flowchart of yet another display method according to this application.

### DESCRIPTION OF EMBODIMENTS

The following describes technical solutions of embodiments in this application with reference to accompanying drawings. Terms used in implementations of embodiments of this application are merely intended to interpret specific embodiments of this application, but are not intended to limit this application.

In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

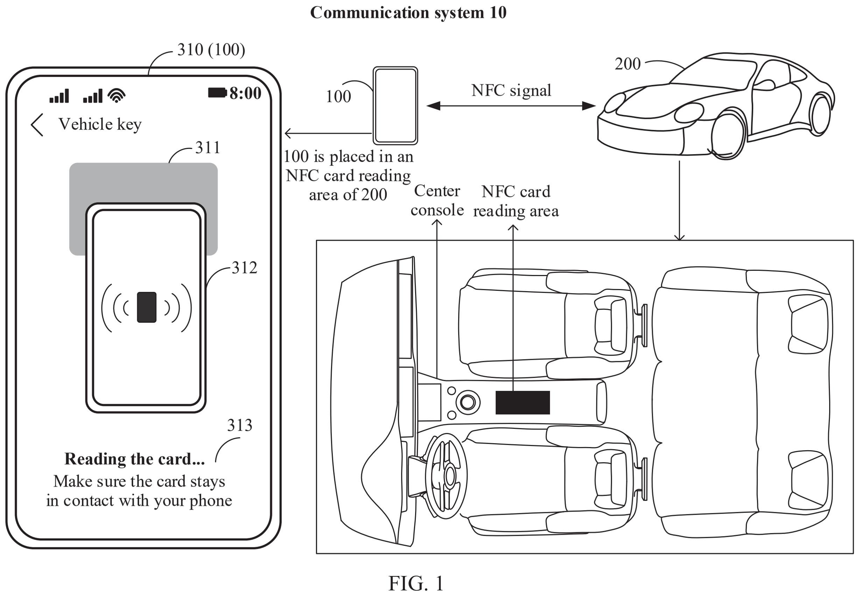

FIG. 1 is a diagram of an architecture of a communication system 10 according to an embodiment of this application.

As shown in FIG. 1, the communication system 10 may include an electronic device 100 and an electronic device 200. The electronic device 100 and the electronic device 200 may communicate with each other in a wired manner or a wireless manner. The wired manner includes, for example, but is not limited to, a high-definition multimedia interface (high definition multimedia interface, HDMI), a universal serial bus (universal serial bus, USB), a coaxial cable, and an optical fiber. The wireless manner includes, for example, but is not limited to, Bluetooth, wireless fidelity (wireless fidelity, Wi-Fi), near field communication (near field communication, NFC), ultra-wideband (ultra-wideband, UWB), infrared, and a short-range wireless communication technology (for example, a Sparklink low energy (Sparklink low energy, SLE) technology or a Sparklink basic (Sparklink basic, SLB) technology) specified by Sparklink (Sparklink) Alliance.

In embodiments of this application, both the electronic device 100 and the electronic device 200 include an NFC module, to implement an NFC communication process. For example, as shown in FIG. 1, an NFC signal may be transmitted between the electronic device 100 and the electronic device 200. In FIG. 1, an example in which the electronic device 100 is a mobile phone and the electronic device 200 is a vehicle is used for illustration. An NFC card reading area may be integrated into a center console of the electronic device 200. When the electronic device 100 is close to the NFC card reading area of the electronic device 200, the electronic device 200 may send an NFC signal (for example, used to wake up the NFC module of the electronic device 100) (which may be referred to as a wakeup signal for short) to the electronic device 100. After receiving the NFC signal, the electronic device 100 may display an NFC card reading interface, for example, a user interface 310 shown in FIG. 1. The electronic device 200 may further send, to the electronic device 100, an NFC signal used to detect/authenticate an NFC key of the electronic device 100 (which may be referred to as an authentication request signal for short). Correspondingly, the electronic device 100 may reply to the electronic device 200 with an NFC signal including information about the NFC key of the electronic device 100 (which may be referred to as an authentication response signal for short). In this way, the electronic device 200 detects/authenticates the NFC key of the electronic device 100, and a function of controlling (for example, starting) the electronic device 200 without a physical key can be implemented when the authentication succeeds. The user interface 310 may include a title "Vehicle key", indicating that a card reading interface of an NFC vehicle key is currently triggered, the user interface 310 may include an illustration 311 of the NFC card reading area, an illustration 312 of this device, and prompt information 313 (including "Reading the card" and "Make sure the card stays in contact with your phone").

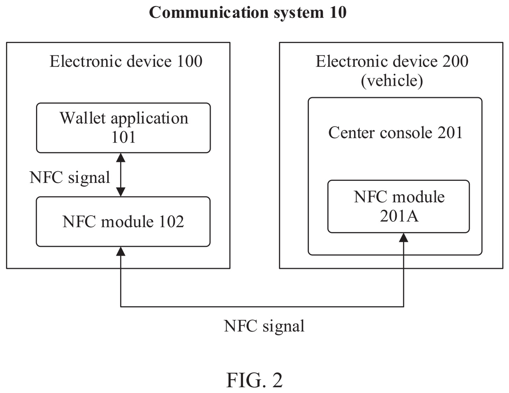

FIG. 2 is a diagram of an architecture of another communication system 10 according to this application.

As shown in FIG. 2, the communication system 10 may include an electronic device 100 and an electronic device 200. For details, refer to the descriptions of the electronic device 100 and the electronic device 200 in FIG. 1. The electronic device 100 shown in FIG. 2 may include a wallet application 101 and an NFC module 102. The electronic device 200 (vehicle) shown in FIG. 2 may include a center console 201. The center console 201 may include an NFC module 201A, and the NFC module 201A corresponds to an NFC card reading area.

In an implementation, when the electronic device 100 and the NFC card reading area of the electronic device 200 are close to each other and remain relatively stationary for a long time, for example, as shown in FIG. 1, when a user in a driver's seat or a front passenger's seat keeps the electronic device 100 (mobile phone) on the center console of the electronic device 200 (vehicle), the electronic device 200 may periodically perform polling (to be specific, periodically send a wakeup signal). Specifically, as shown in FIG. 2, the electronic device 200 may periodically send the wakeup signal to the NFC module 102 of the electronic device 100 via the NFC module 201A. Each time after receiving the wakeup signal, the NFC module 102 may report the wakeup signal to the wallet application 101 of the electronic device 100. Therefore, the wallet application 101 frequently displays an NFC card reading interface (for example, the user interface 310 shown in FIG. 1). In addition, after sending the wakeup signal, the electronic device 200 may further send an authentication request signal to the NFC module 102 of the electronic device 100 via the NFC module 201A, and the wallet application 101 may indicate, based on the authentication request signal, the NFC module 102 to send an authentication response signal to the NFC module 201A. Therefore, an NFC signal related to an NFC key authentication process is also frequently transmitted between the electronic device 100 and the electronic device 200. This affects user experience and causes high power consumption. It may be understood that, when the user keeps the electronic device 100 on the electronic device 200, the user may want to perform NFC key authentication only once, or may not want to perform NFC key authentication. For example, an NFC card reading area and a wireless charging area are integrated into center consoles of some vehicles (for example, the wireless charging area is further integrated into the NFC card reading area as shown in FIG. 1). When the user wants to charge the electronic device 100 via the electronic device 200, the user keeps the electronic device 100 on the center console of the electronic device 200, and the user probably does not want to perform NFC key authentication. In this case, frequent displaying of the NFC card reading interface on the electronic device 100 severely affects user experience, and causes a power consumption problem, resulting in a decrease in charging efficiency of the electronic device 100.

In another implementation, preset duration after the electronic device 200 successfully authenticates the NFC key of the electronic device 100 is a suppression period, and the preset duration is usually about 1 or 2 minutes. The electronic device 200 does not send a wakeup signal to the electronic device 100 in the suppression period. Therefore, in the suppression period, the electronic device 100 does not display the NFC card reading interface, and no NFC signal related to the NFC key authentication process is transmitted between the electronic device 100 and the electronic device 200. However, after the suppression period ends, the electronic device 200 further sends a wakeup signal. As a result, the electronic device 100 displays the NFC card reading interface again. This implementation still cannot effectively resolve the technical problems existing in the foregoing implementation. For example, the NFC card reading interface can be prevented from being displayed within only a short period of time after the NFC key is authenticated. That is, only a problem occurrence frequency can be alleviated, and problems of poor user experience and high power consumption cannot be effectively resolved. For another example, some electronic devices 100 do not enable an NFC key, and therefore cannot meet an authentication success condition to enter a suppression period. In other words, a device that has not enabled the NFC key cannot benefit. For another example, a manufacturer of the electronic device 200 needs to reconstruct the electronic device 200. Implementation difficulty is high, a consumption period is long, and an existing device cannot benefit.

An embodiment of this application provides a display method, applied to the communication system 10. The communication system 10 includes the electronic device 100 and the electronic device 200. When a user places the electronic device 100 and an NFC card reading area of the electronic device 200 close to each other, and the electronic device 100 and the NFC card reading area of the electronic device 200 remain relatively stationary, for example, when the electronic device 100 (mobile phone) is placed on the NFC card reading area of the center console of the electronic device 200 (vehicle) as shown in FIG. 1, the electronic device 200 may send an NFC signal (for example, a wakeup signal or an authentication request signal) to the electronic device 100. After receiving the NFC signal of the electronic device 200, the electronic device 100 may determine, based on status sensing of the electronic device 100 and optionally, whether the electronic device 100 enables an NFC key, whether to display the NFC card reading interface currently, and optionally, determine whether to perform an NFC key authentication process. Compared with the foregoing short-time suppression period, in this embodiment of this application, a "permanent suppression period" may be implemented when a determining result is no. In this way, problems of poor user experience and high device power consumption that are caused by repeatedly displaying the NFC card reading interface on the electronic device 100 can be avoided. In addition, a capability of the display method is released with the electronic device 100 (for example, released with a wallet application on the electronic device 100). Even if an electronic device 100 with low performance or an electronic device 100 whose NFC key is not enabled supports the capability without depending on reconstruction of the electronic device 200 (for example, a vehicle). Therefore, more electronic devices 100 and electronic devices 200 can be covered, and application scenarios are wider.

That the electronic device 100 enables the NFC key may also be referred to as that the electronic device 100 is registered with the NFC key, or the electronic device 100 includes the NFC key, or the like. It may be understood that the NFC key may control a corresponding device (one NFC key may correspond to at least one device). For example, an NFC vehicle key 1 is used to control a vehicle 1 to start, an NFC vehicle key 2 is used to control a vehicle 2 to start, an NFC door key 1 is used to control a door 1 to open, and an NFC door key 2 is used to control a door 2 to open. One NFC key may have one piece of identification information (for example, an application identifier (application identifier, AID)), and different identification information corresponds to different NFC keys. Optionally, identification information of a plurality of NFC keys may be the same.

The NFC card reading interface is a card reading interface of the NFC module of the electronic device 100, and may also be referred to as a verification interface, a usage interface, or the like. The NFC key may also be referred to as an NFC card or the like.

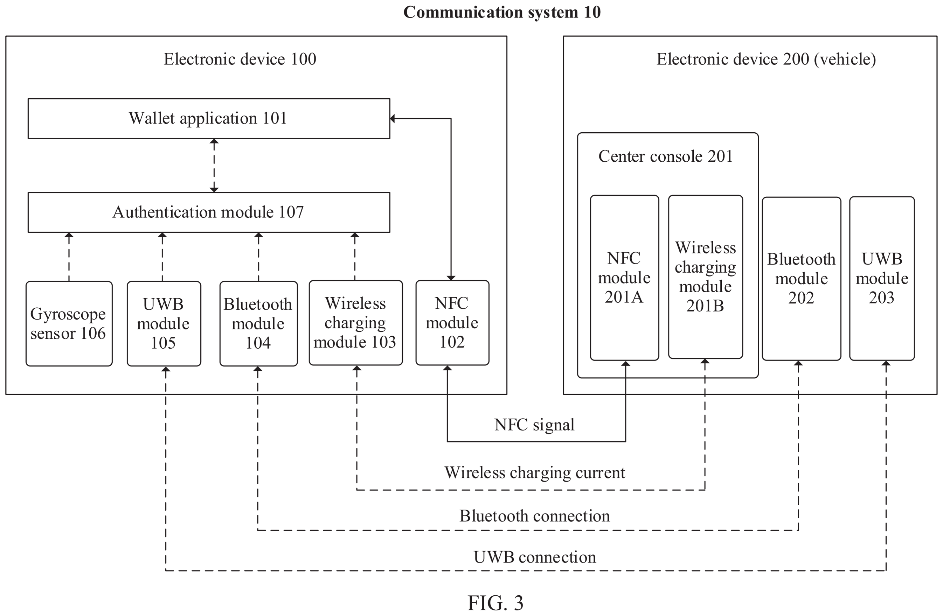

FIG. 3 is a diagram of an architecture of still another communication system 10 according to this application.

As shown in FIG. 3, the communication system 10 may include an electronic device 100 and an electronic device 200. For details, refer to the descriptions of the electronic device 100 and the electronic device 200 in FIG. 1. The electronic device 100 shown in FIG. 3 may include a wallet application 101, an NFC module 102, a wireless charging module 103, a Bluetooth module 104, a UWB module 105, a gyroscope sensor 106, and an authentication module 107. The electronic device 200 (vehicle) shown in FIG. 3 may include a center console 201, a Bluetooth module 202, and a UWB module 203. The center console 201 may include an NFC module 201A (corresponding to an NFC card reading area) and a wireless charging module 201B.

The wallet application 101 of the electronic device 100 may be configured to manage a digital key like an NFC key, a UWB key, or a Bluetooth key of the electronic device 100. Any digital key may be configured to control another device like the electronic device 200. For example, an NFC/UWB/Bluetooth key of a vehicle key may be used to start a vehicle, and an NFC/UWB/Bluetooth key of a door key/access card may be used to open a door. The wallet application 101 may be further used to invoke the authentication module 107, to determine whether to display an NFC card reading interface (for example, the user interface 310 shown in FIG. 1), and optionally, determine whether to perform an NFC key authentication process.

The NFC module 102 of the electronic device 100 may be configured to transmit an NFC signal to the NFC module 201A of the electronic device 200.

The wireless charging module 103 of the electronic device 100 may be configured to perform wireless charging with the wireless charging module 201B of the electronic device 200 (which may be referred to as being in a wireless charging state). In an implementation, the electronic device 100 may be used as a charged device that receives a charging current, and the electronic device 200 may be used as a charging device that provides a charging current. For example, when the electronic device 100 is placed on the center console 201 of the electronic device 200, the electronic device 200 may send a charging current to the wireless charging module 103 of the electronic device 100 via the wireless charging module 201B, so that the electronic device 200 charges the electronic device 100. In an implementation, the wireless charging module 103 may report a status of the wireless charging module 103 (for example, whether the wireless charging module 103 is in the wireless charging state) to the authentication module 107.

The Bluetooth module 104 of the electronic device 100 may be configured to establish a Bluetooth connection to the Bluetooth module 202 of the electronic device 200. For example, the electronic device 100 enables the Bluetooth key. When the electronic device 100 approaches the electronic device 200, the Bluetooth key of the electronic device 100 may establish a Bluetooth connection to the electronic device 200. Optionally, a connection for the first time may be implemented through a manual operation of a user. Optionally, a Bluetooth key and the electronic device 200 that have established a Bluetooth connection may automatically establish a connection when the electronic device 100 and the electronic device 200 approach each other. In an implementation, the Bluetooth module 104 may report a status of the Bluetooth module 104 (for example, a connection status of the Bluetooth module 104 and/or a connection status of the Bluetooth key) to the authentication module 107.

The UWB module 105 of the electronic device 100 may be configured to establish a UWB connection to the UWB module of the electronic device 200. For example, the electronic device 100 enables the UWB key. When the electronic device 100 approaches the electronic device 200, the UWB key of the electronic device 100 may establish a UWB connection to the electronic device 200. In an implementation, the UWB module 105 may report a status of the UWB module 105 (for example, a connection status of the UWB module 105 and/or a connection status of the UWB key) to the authentication module 107.

The gyroscope sensor 106 of the electronic device 100 may be configured to determine a motion posture (which may also be referred to as a physical posture) of the electronic device 100. In an implementation, the gyroscope sensor 106 may report detection information to the authentication module 107, so that the authentication module 107 determines the motion posture of the electronic device 100 based on the detection information.

The electronic device 100 may obtain a relative location of the electronic device 100 and the electronic device 200 via at least one module, to determine whether the electronic device 100 and the electronic device 200 remain relatively stationary. For example, the electronic device 100 and the electronic device 200 transmit respective locations via the Bluetooth module 104, to determine the relative location of the electronic device 100 and the electronic device 200. This is not limited thereto. The relative location of the electronic device 100 and the electronic device 200 may alternatively be obtained via another communication module (for example, a UWB module or an NFC module) or another sensor (for example, an optical proximity sensor, a gyroscope sensor, or a position sensor).

The authentication module 107 of the electronic device 100 may be configured to obtain a status and/or detection information of at least one of the following modules: the wireless charging module 103, the Bluetooth module 104, the UWB module 105, and the gyroscope sensor 106. The authentication module 107 may determine, based on the obtained status and/or detection information and optionally, whether the electronic device 100 enables the NFC key, whether to display the NFC card reading interface currently, and optionally, determine whether NFC key authentication needs to be currently performed with the electronic device 200. A determining result of the authentication module 107 may be reported to the wallet application 101.

For example, when the electronic device 100 and the NFC card reading area of the electronic device 200 are close to each other and remain relatively stationary for a long time, for example, as shown in FIG. 1, when the user in the driver's seat or the front passenger's seat keeps the electronic device 100 (mobile phone) on the center console of the electronic device 200 (vehicle), the electronic device 200 may periodically perform polling. Specifically, as shown in FIG. 3, the electronic device 200 may periodically send a wakeup signal to the NFC module 102 of the electronic device 100 via the NFC module 201A. Each time after receiving the wakeup signal, the NFC module 102 may report the wakeup signal to the wallet application 101 of the electronic device 100. The wallet application 101 may invoke the authentication module 107. The authentication module 107 may determine, based on the obtained status and/or detection information of the at least one module, whether to display the NFC card reading interface currently, and report a determining result to the wallet application 101, so that the wallet application 101 displays a corresponding interface based on the determining result. In addition, after sending the wakeup signal, the electronic device 200 may further send an authentication request signal to the NFC module 102 of the electronic device 100 via the NFC module 201A. The NFC module 102 reports the received authentication request signal to the wallet application 101. In this case, the wallet application 101 may invoke the authentication module 107. The authentication module 107 may determine, based on the obtained status and/or detection information of the at least one module and whether the electronic device 100 enables the NFC key, whether NFC key authentication needs to be currently performed with the electronic device 200 and whether to display the NFC card reading interface, and report a determining result to the wallet application 101, so that the wallet application 101 performs a corresponding operation based on the determining result. When the authentication module 107 determines to perform NFC key authentication with the electronic device 200, the wallet application 101 may indicate the NFC module 102 to send an authentication response signal to the NFC module 201A, so that the electronic device 200 authenticates the NFC key of the electronic device 100 based on the authentication response signal.

It may be understood that, in a scenario in which the electronic device 100 and the NFC card reading area of the electronic device 200 are close to each other and remain relatively stationary for a long time, even if the electronic device 200 still performs periodic polling, the electronic device 100 determines, based on status sensing, whether to display the NFC card reading interface. Therefore, the NFC card reading interface is not repeatedly displayed based on a polling frequency of the electronic device 200. This effectively improves user experience. In addition, the electronic device 100 may perform precise determining with reference to statuses and/or detection information of a plurality of modules, to avoid affecting use experience of the NFC key in another scenario, and greatly improve availability of the NFC key.

In FIG. 3, an example in which the electronic device 100 and the electronic device 200 each include a Bluetooth module and a UWB module is used for illustration. In specific implementation, the electronic device 100 and/or the electronic device 200 may alternatively not include these communication modules, and the electronic device 100 and/or the electronic device 200 may alternatively include a communication module of another communication technology, for example, a Sparklink communication module or an infrared communication module. Quantities and types of communication modules included in the electronic device 100 and the electronic device 200 are not limited in embodiments of this application. Correspondingly, the electronic device 100 may also include a Sparklink key, an infrared key, and the like. A quantity and types of digital keys included in the electronic device 100 are not limited in embodiments of this application.

FIG. 3 is illustrated by using an example in which the electronic device 100 includes the gyroscope sensor 106, and the motion posture of the electronic device 100 is determined based on the detection information of the gyroscope sensor 106. In specific implementation, the electronic device 100 may further include another sensor, and the motion posture of the electronic device 100 is determined based on detection information of the another sensor, or the motion posture of the electronic device 100 may be determined based on an image shot by a camera. A module that is in the electronic device 100 and that is configured to determine the motion posture of the electronic device 100 is not limited in embodiments of this application.

In FIG. 3, an example in which the electronic device 100 and the electronic device 200 each include a wireless charging module is used for illustration. In specific implementation, the electronic device 100 and/or the electronic device 200 may alternatively not include a wireless charging module.

In FIG. 3, an example in which the electronic device 200 is a vehicle and the NFC module 201A and the wireless charging module 201B are integrated into the center console 201 is used for illustration. In specific implementation, the NFC module 201A and the wireless charging module 201B may alternatively be integrated into another module of the vehicle, alternatively, or the electronic device 200 may be in another form. In this case, the NFC module 201A and the wireless charging module 201B may be integrated into a module of the electronic device 200 in a corresponding form, or the NFC module 201A and the wireless charging module 201B may not be integrated together. This is not limited in embodiments of this application.

Forms of the electronic device 100 and the electronic device 200 shown in FIG. 1 to FIG. 3 are merely used as examples. In specific implementation, the electronic device 100 and the electronic device 200 may alternatively be in other forms. For specific examples, refer to the following descriptions of the electronic device 100 and the electronic device 200. This is not limited in embodiments of this application.

The following describes an electronic device 100 and an electronic device 200 in embodiments of this application by using examples.

In this application, the electronic device 100/the electronic device 200 may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart household device like a smart television or a smart camera, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, or a smart city device. A specific type of the electronic device is not specially limited in embodiments of this application.

It may be understood that the structure shown in embodiments of this application does not constitute a specific limitation on the electronic device. In some other embodiments of this application, the electronic device may include more or fewer components than those shown in the figure, or a combination of a part of the components, or splits from a part of the components, or an arrangement of different components. The components shown in the figure may be implemented by hardware, software, or a combination of software and hardware.

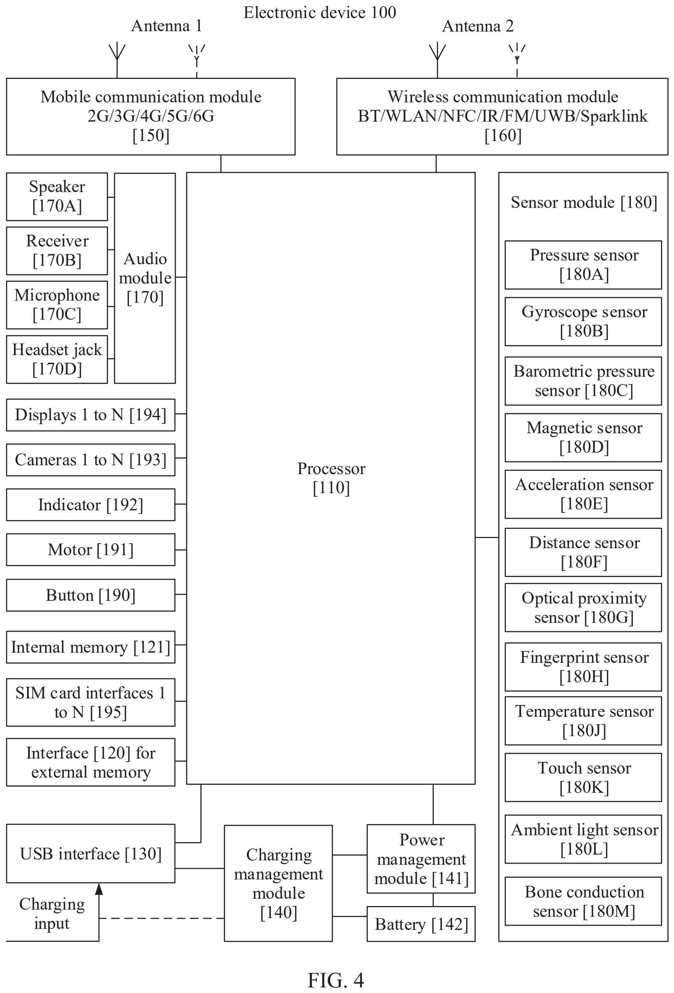

FIG. 4 is a diagram of a hardware structure of an electronic device 100 according to an embodiment of this application.

As shown in FIG. 4, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In an implementation, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In an implementation, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from the wired charger through a USB interface 130. In some wireless charging implementations, the charging management module 140 may receive a wireless charging input through a wireless charging coil of the electronic device 100, for example, receive a wireless charging input of the electronic device 200. When charging the battery 142, the charging management module 140 may further supply power to the electronic device 100 through the power management module 141. In an implementation, the charging management module 140 may report, to the processor 110, whether the electronic device 100 is in a wireless charging state, so that the processor 110 determines whether to display an NFC card reading interface.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In another implementation, the power management module 141 may alternatively be disposed in the processor 110. In another implementation, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In another implementation, the antenna may be used in combination with a tuning switch.

The mobile communication module 150 may provide a wireless communication solution that is applied to the electronic device 100 and that includes a 2nd generation (2nd generation, 2G) mobile communication technology/a 3rd generation (3rd generation, 3G) mobile communication technology/a 4th generation (4th generation, 4G) mobile communication technology/a 5th generation (5th generation, 5G) mobile communication technology/a 6th generation (6th generation, 6G) mobile communication technology. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In an implementation, at least some functional modules of the mobile communication module 150 may be disposed in the processor 110. In an implementation, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In an implementation, the modem processor may be an independent component. In another implementation, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, UWB, Sparklink, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In an implementation, the wireless communication module 160 may report a status of a wireless communication connection between the electronic device 100 and the electronic device 200 to the processor 110, for example, whether a wireless communication connection is established between the electronic device 100 and the electronic device 200, a type of an established wireless communication connection (for example, Bluetooth, UWB, or Sparklink), whether a connection is established between a digital key and the electronic device 200 when the electronic device 100 has enabled the digital key in a wireless communication mode, and the like, so that the processor 110 determines whether to display the NFC card reading interface.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In an implementation, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scenario. In an implementation, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In an implementation, the electronic device 100 may include one or N cameras 193, where N is a positive integer greater than 1.

In an implementation, the camera 193 may send a photographed image to the processor 110, and the processor 110 may obtain, based on the photographed image, a status of the electronic device 100 like a relative location of the electronic device 100 and the electronic device 200, a relative motion status of the electronic device 100 and the electronic device 200, or a motion posture of the electronic device 100, and determines, based on the obtained status, whether to display the NFC card reading interface.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In an implementation, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100.

The pressure sensor 180A is configured to sense a pressure signal, and can convert the pressure signal into an electrical signal. When a touch operation is performed on the display 194, the electronic device 100 detects intensity of the touch operation through the pressure sensor 180A. The electronic device 100 may also calculate a touch location based on a detection signal of the pressure sensor 180A.

The gyroscope sensor 180B may be configured to determine a moving posture of the electronic device 100. In an implementation, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure.

The magnetic sensor 180D includes a Hall sensor.

The acceleration sensor 180E may detect accelerations in various directions (usually on three axes) of the electronic device 100. When the electronic device 100 is still, a magnitude and a direction of gravity may be detected. The acceleration sensor may be further configured to identify a posture of the electronic device, and is used in an application such as switching between a landscape mode and a portrait mode or a pedometer.

The distance sensor 180F is configured to measure a distance.

The optical proximity sensor 180G may include, for example, a light emitting diode (LED) and an optical detector, for example, a photodiode. The light emitting diode may be an infrared light emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect the relative location and the relative motion status of the electronic device 100 and the electronic device 200 via the optical proximity sensor 180G.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In another implementation, the touch sensor 180K may alternatively be disposed on a surface of the electronic device 100 at a location different from that of the display 194.

The bone conduction sensor 180M may obtain a vibration signal.

In an implementation, the gyroscope sensor 180B and/or the acceleration sensor 180E may report detection information to the processor 110, so that the processor 110 obtains the motion posture of the electronic device 100 and the relative motion status of the electronic device 100 and the electronic device 200. In this way, the processor 110 determines whether to display the NFC card reading interface.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. For example, a software system of the layered architecture may be an Android (Android) system, or may be a Harmony (harmony) operating system (operating system, OS), or another software system. In embodiments of this application, an Android system with a layered architecture is used as an example to describe a software structure of the electronic device 100.

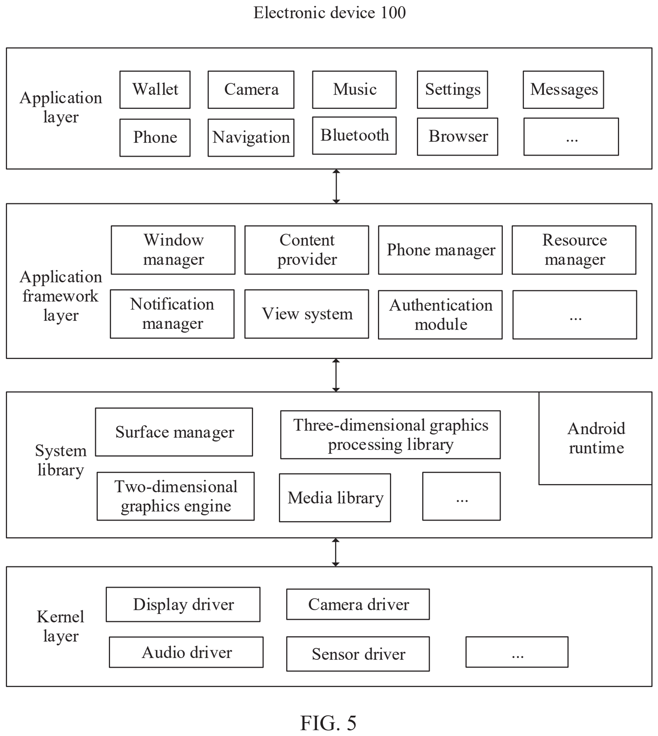

FIG. 5 is a diagram of a software architecture of an electronic device 100 according to this application.

In a layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom.

The application layer may include a series of application packages.

As shown in FIG. 5, the application package may include applications such as Wallet, Camera, Music, Settings, Phone, Navigation, Bluetooth, Videos, Messages, and Browser. The application in this application may alternatively be replaced with other software like an applet or an atomic service. The wallet application in embodiments of this application may be used to manage at least one NFC key. Different NFC keys may be used to control different devices, and different NFC keys may also be used to control different functions of a same device. A function of the NFC key is not limited in embodiments of this application. Not limited thereto, the wallet application may be further used to manage a digital key like a Bluetooth key, a UWB key, or a Sparklink key. This is not limited thereto. The NFC key may alternatively be managed through another application, for example, the settings application.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, an authentication module, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is played, the electronic device 100 vibrates, or the indicator light blinks.

The authentication module is configured to: obtain a status of the electronic device 100, optionally, determine whether the electronic device 100 enables an NFC key, determine whether to display an NFC card reading interface, and optionally, determine whether to perform an NFC key authentication process with the electronic device 200.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2-dimensional (2-dimensional, 2D) graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device 100 with reference to an NFC card reading scenario.

When a wireless communication module 160 receives a wakeup signal sent by the electronic device 200, a corresponding hardware interrupt is sent to the kernel layer. The kernel layer processes the wakeup signal into an original input event (including information such as specific content of the wakeup signal and a timestamp of receiving the wakeup signal). The original input event is stored at the kernel layer. The application framework layer obtains the original input event from the kernel layer, and identifies an application (assumed to be a wallet application) corresponding to the input event. In this case, the wallet application invokes an interface of the application framework layer, controls the display driver by invoking the kernel layer, and displays the NFC card reading interface via the display 194.

Based on the foregoing embodiments, the display method provided in embodiments of this application is described. The method may be applied to the communication system 10 shown in FIG. 1. The method may be applied to the communication system 10 shown in FIG. 3. The method may be applied to the electronic device 100 shown in FIG. 4. The method may be applied to the electronic device 100 shown in FIG. 5.

In the following embodiment, an example in which a physical posture of the electronic device 100 is detected via a gyroscope sensor 106 is used for description. In the following embodiment, an example in which the electronic device 100 includes a Bluetooth module/UWB module and may establish a Bluetooth/UWB connection to another device (for example, the electronic device 200) is used for description.

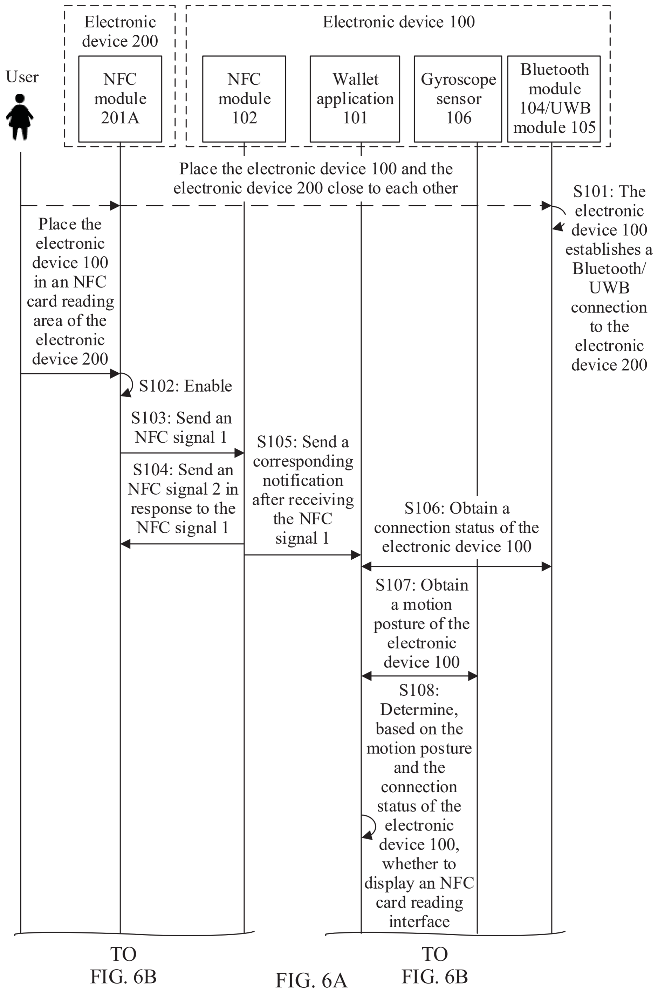

FIG. 6A to FIG. 6C are a schematic flowchart of a display method according to this application. The method may include but is not limited to the following steps.

S101: When a user places an electronic device 100 close to an electronic device 200, the electronic device 100 and the electronic device 200 may establish a Bluetooth/UWB connection. Optionally, a Bluetooth module 104/UWB module 105 of the electronic device 100 and a Bluetooth module 202/UWB module 203 of the electronic device 200 establish a Bluetooth/UWB connection.

In an implementation, S101 is an optional step. In an implementation, when the electronic device 100 has enabled a Bluetooth/UWB key corresponding to the electronic device 200, if the user places the electronic device 100 close to the electronic device 200, the electronic device 100 may establish the Bluetooth/UWB connection to the electronic device 200 via the Bluetooth/UWB key.

S102: When the user places the electronic device 100 in an NFC card reading area of the electronic device 200, an NFC module 201A of the electronic device 200 may be enabled, to transmit an NFC signal.

S103: The NFC module 201A of the electronic device 200 sends an NFC signal 1 to an NFC module 102 of the electronic device 100.

In an implementation, the NFC signal 1 may be signaling of a contactless card standard ISO/IEC 14443-3 protocol. In some examples, the NFC signal 1 is a request signal (request A, REQA) or a wakeup signal (wakeup A, WUPA). The NFC signal 1 may be used to request an NFC card type of the electronic device 100. The NFC card type is distinguished in a manner in which an NFC card (the electronic device 100 in this embodiment of this application) sends a signal to a card reading device (the electronic device 200 in this embodiment of this application), and may be classified into a type A (type A) and a type B (type B). A card of the type A may send a signal through a 13.65 megahertz (megahertz, MHz) carrier, a coding scheme is miller (miller) coding, and a carrier amplitude modulation manner is 100% amplitude shift keying (amplitude shift keying, ASK). A card of the type B may send a signal through a 13.65 MHz carrier, a coding scheme is a non-return to zero (non-return to zero, NRA) method, and a carrier amplitude modulation manner is 10% ASK. Not limited to the foregoing example, in specific implementation, there may be another NFC card type, for example, a wallet (FeliCa) type, which may also be referred to as a type F (type F) for short.

In an implementation, after receiving the NFC signal 1, the NFC module 102 of the electronic device 100 may be woken up to transmit the NFC signal.

S104: The NFC module 102 of the electronic device 100 sends an NFC signal 2 to the NFC module 201A of the electronic device 200 in response to the NFC signal 1.

In an implementation, an NFC key that is of the electronic device 100 and that is included in the NFC signal 2 is a virtual key or a physical key. The electronic device 100 in this embodiment of this application is, for example, a mobile terminal like a mobile phone or a wearable device. Therefore, the NFC key included in the electronic device 100 is the virtual key. This is not limited thereto. In another implementation, the electronic device 100 may alternatively include a physical NFC key, or the electronic device 100 is a physical NFC key.

In an implementation, the NFC signal 2 may be signaling of the ISO/IEC 14443-3 protocol. In some examples, the NFC signal 2 is a request response signal (answer to request A, ATQA) of the NFC signal 1.

S105: The NFC module 102 of the electronic device 100 sends a corresponding notification to a wallet application 101 after receiving the NFC signal 1. For example, the NFC module 102 may broadcast, to an application on the electronic device 100, a notification indicating that the NFC signal 1 is received.

S106: The wallet application 101 of the electronic device 100 obtains a connection status of the electronic device 100 from the Bluetooth module 104/UWB module 105.

In an implementation, the connection status of the electronic device 100 may include whether to establish a Bluetooth/UWB connection to the electronic device 200. Optionally, when the electronic device 100 has enabled the Bluetooth/UWB key corresponding to the electronic device 200, the connection status of the electronic device 100 may include whether the electronic device 100 has established a Bluetooth/UWB connection to the electronic device 200 via the Bluetooth/UWB key corresponding to the electronic device 200. It may be understood that a short-range communication connection like a Bluetooth/UWB connection can be successfully established only when the electronic device 100 and the electronic device 200 are close to each other. Therefore, when the Bluetooth/UWB connection is established between the electronic device 100 and the electronic device 200, it indicates that the electronic device 100 is near the electronic device 200.

S107: The wallet application 101 of the electronic device 100 obtains a motion posture of the electronic device 100 from a gyroscope sensor 106.

In an implementation, when it is learned in S106 that the electronic device 100 has established the Bluetooth/UWB connection to the electronic device 200, the wallet application 101 may further obtain the motion posture of the electronic device 100 (that is, perform S107), to determine whether the electronic device 100 is in a still posture. It may be understood that NFC is a short-range communication manner. To transmit an NFC signal, the electronic device 100 and the electronic device 200 need to be close to each other. When the connection status of the electronic device 100 is that the electronic device 100 has established the Bluetooth/UWB connection to the electronic device 200, it indicates that the electronic device 100 is near the electronic device 200, and a basic condition for transmitting the NFC signal is met. In this case, S107 is performed. In this way, a waste of power consumption caused by meaninglessly performing other determining (S107) when the electronic device 100 is far away from the electronic device 200 can be avoided.

S108: The wallet application 101 of the electronic device 100 determines, based on the motion posture and the connection status of the electronic device 100, whether to display an NFC card reading interface.

S109: When the electronic device 100 is in the still posture and has established the Bluetooth/UWB connection to the electronic device 200, the wallet application 101 of the electronic device 100 skips displaying the NFC card reading interface; otherwise, displays the NFC card reading interface.

In an implementation, when the electronic device 100 is in the still posture and has established the Bluetooth/UWB connection to the electronic device 200 (which may be considered as in a specific scenario), the electronic device 100 may not display the NFC card reading interface, for example, keep an original display interface unchanged. The foregoing specific scenario may exclude a scenario in which the user uses the NFC key, for example, exclude a scenario in which the user uses another digital key when the user is far away from the electronic device 200 (in this scenario, a connection in a near field communication manner like Bluetooth/UWB cannot be established to the electronic device 200), for another example, exclude a scenario in which the user uses an NFC transit card near the electronic device 200 to take a ride, like a "one-time card tap authentication" scenario (in this scenario, the electronic device 100 is not in the still posture). Therefore, false card pop-up in a specific scenario in which the NFC signal 1 is received can be accurately suppressed.

In another implementation, when the electronic device 100 is not in the still posture (that is, in a moving state) and/or has not established the Bluetooth/UWB connection to the electronic device 200, it may be considered that the electronic device 100 is not in the foregoing specific scenario, and the user may use the NFC key. In this case, the electronic device 100 may display the NFC card reading interface. This can avoid affecting normal card use experience of a digital key like an access card. In some examples, when displaying the NFC card reading interface, the electronic device 100 may display the NFC key of the electronic device 100 in the NFC card reading interface. It may be understood that the electronic device 100 sets the NFC key at an uppermost layer of a plurality of cards/a plurality of digital keys, and the electronic device 100 may set displayed information about the NFC key to an obtainable/readable state, so that another device reads and authenticates the NFC key.

S110: The NFC module 201A of the electronic device 200 determines, based on the NFC signal 2, to initiate NFC key authentication.

In an implementation, after receiving the NFC signal 2 in response to the NFC signal 1, the NFC module 201A determines to initiate NFC key authentication, and therefore performs S111.

In an implementation, when the NFC key that is of the electronic device 100 and that is included in the NFC signal 2 is a virtual key, the NFC module 201A determines to initiate NFC key authentication, and therefore performs S111.

S111: The NFC module 201A of the electronic device 200 sends an NFC signal 3 (including an AID 1) to the NFC module 102 of the electronic device 100.

In an implementation, the NFC signal 3 may be signaling of an ISO/IEC 14443-4 protocol, and is used to request to detect/authenticate the NFC key of the electronic device 100.

In an implementation, the AID 1 is an identifier of an NFC key corresponding to the electronic device 200, and the electronic device 200 may send the NFC signal 3 including the AID 1 to the electronic device 100, to request to detect/authenticate an NFC key corresponding to the AID 1 in the electronic device 100.

S112: The NFC module 102 of the electronic device 100 sends a corresponding notification to the wallet application 101 after receiving the NFC signal 3. For example, the NFC module 102 may broadcast, to an application on the electronic device 100, a notification indicating that the NFC signal 3 is received.

S113: The wallet application 101 of the electronic device 100 obtains the connection status of the electronic device 100 from the Bluetooth module 104/UWB module 105.

S114: The wallet application 101 of the electronic device 100 obtains the motion posture of the electronic device 100 from the gyroscope sensor 106.

For descriptions of S113 and S114, refer to the descriptions of S106 and S107. A difference lies in that S106 and S107 are performed after the wallet application 101 receives a notification indicating that the NFC signal 1 enters a field, and S113 and S114 are performed after the wallet application 101 receives a notification indicating that the NFC signal 3 enters a field.

S115: The wallet application 101 of the electronic device 100 determines, based on the motion posture and the connection status of the electronic device 100 and whether the NFC key corresponding to the AID 1 is enabled, whether to display the NFC card reading interface and whether to perform an NFC key authentication process (for a determining result, refer to Case A and Case B).

S116: In Case A, when the electronic device 100 is in the still posture, has established the Bluetooth/UWB connection to the electronic device 200, and has not enabled the NFC key corresponding to the AID 1, the wallet application 101 of the electronic device 100 skips displaying the NFC card reading interface and skips performing an NFC key authentication process.

In an implementation, when the electronic device 100 is in the still posture and has established the Bluetooth/UWB connection to the electronic device 200, it may be considered that the electronic device 100 is in a specific scenario. The specific scenario may exclude a scenario in which the user uses the NFC key. In the specific scenario, if the electronic device 100 has not enabled the NFC key corresponding to the AID 1, the electronic device 100 may not display the NFC card reading interface, for example, keep an original display interface unchanged, and does not perform an NFC key authentication process with the electronic device 200, for example, does not perform S117 and S118 in Case B.

S117: In Case B, the wallet application 101 of the electronic device 100 sends an NFC signal 4 to the NFC module 201A of the electronic device 200 via the NFC module 102 when the electronic device 100 meets at least one of the following: The electronic device 100 is not in the still posture, the electronic device 100 has not established the Bluetooth/UWB connection to the electronic device 200, and the electronic device 100 has enabled the NFC key corresponding to the AID 1.

In an implementation, when the electronic device 100 meets at least one of the following: The electronic device 100 is not in the still posture (that is, in a moving state), the electronic device 100 has not established the Bluetooth/UWB connection to the electronic device 200, and the electronic device 100 has enabled the NFC key (which may be referred to as an NFC key 1) corresponding to the AID 1, it may be considered that the electronic device 100 is not in a specific scenario and/or the NFC key 1 corresponding to the electronic device 200 exists, and the user may use the NFC key. In this case, the electronic device 100 may perform an NFC key 1 authentication process. In some examples, when the electronic device 100 has enabled the NFC key 1 corresponding to the AID 1, the electronic device 100 may send the NFC signal 4 to the electronic device 200 in response to the NFC signal 3 (including the AID 1). The NFC signal 4 includes information about the NFC key 1 corresponding to the AID 1. In some other examples, when the electronic device 100 has not enabled the NFC key corresponding to the AID 1, the electronic device 100 may alternatively send information about another NFC key in the NFC signal 4. In some other examples, when the electronic device 100 has not enabled the NFC key corresponding to the AID 1, the electronic device 100 may not send information about the NFC key in the NFC signal 4. For example, the NFC signal 4 indicates that the NFC key corresponding to the AID 1 is not enabled.

S118: The NFC module 201A of the electronic device 200 performs NFC key authentication based on the NFC signal 4.

S118 is an optional step. In an implementation, when the NFC signal 4 includes the information about the NFC key (for example, the NFC key 1), after receiving the NFC signal 4, the NFC module 201A of the electronic device 200 may perform NFC key authentication based on the information about the NFC key in the NFC signal 4. When the authentication succeeds, the electronic device 100 may control the electronic device 200, for example, start the electronic device 200.

S119: In Case B, the wallet application 101 of the electronic device 100 may display the NFC card reading interface when the electronic device 100 meets at least one of the following: The electronic device 100 is not in the still posture, the electronic device 100 has not established the Bluetooth/UWB connection to the electronic device 200, and the electronic device 100 has enabled the NFC key corresponding to the AID 1.

In an implementation, in Case B, it may be considered that the electronic device 100 is not in a specific scenario and/or the NFC key 1 corresponding to the electronic device 200 exists, and the user may use the NFC key. In this case, the electronic device 100 may display the NFC card reading interface. For descriptions of displaying the NFC card reading interface by the electronic device 100, refer to the descriptions of displaying the NFC card reading interface in S109. The NFC key displayed by the electronic device 100 in the NFC card reading interface may be the NFC key indicated by the NFC signal 4. For example, if the electronic device 100 has enabled the NFC key 1 corresponding to the AID 1, the electronic device 100 may display the NFC key 1 in the NFC card reading interface, and the electronic device 100 may set the information about the NFC key 1 to a readable state, to be used by another device to read and authenticate the NFC key 1 (for example, descriptions of S117 and S118).

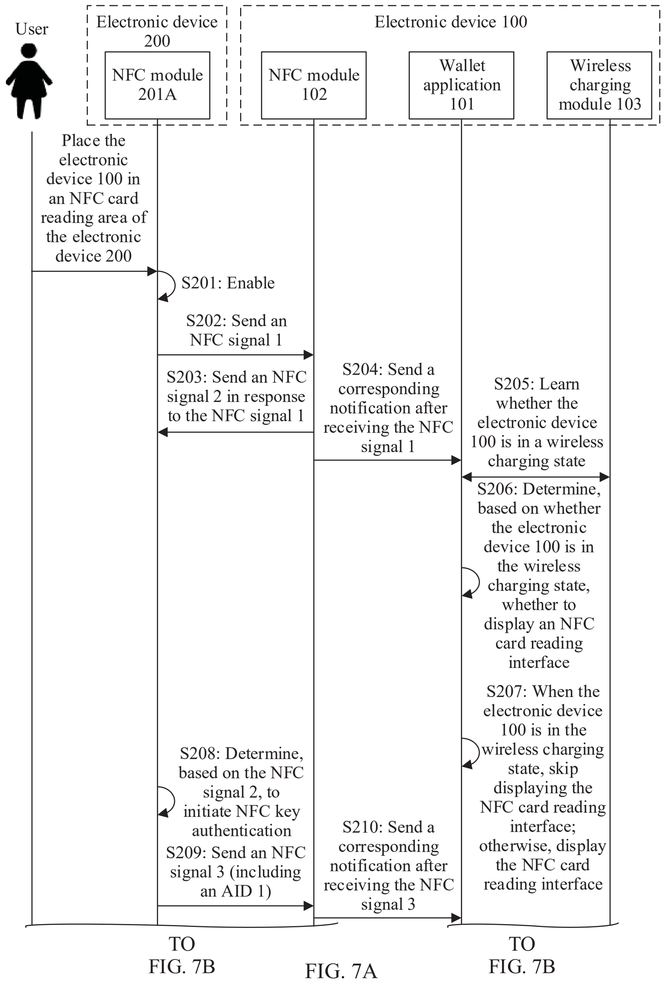

FIG. 7A to FIG. 7C are a schematic flowchart of another display method according to an embodiment of this application. The method may include but is not limited to the following steps.

S201: When a user places an electronic device 100 in an NFC card reading area of an electronic device 200, an NFC module 201A of the electronic device 200 may be enabled, to transmit an NFC signal.

S202: The NFC module 201A of the electronic device 200 sends an NFC signal 1 to an NFC module 102 of the electronic device 100.

S203: The NFC module 102 of the electronic device 100 sends an NFC signal 2 to the NFC module 201A of the electronic device 200 in response to the NFC signal 1.

S204: The NFC module 102 of the electronic device 100 sends a corresponding notification to a wallet application 101 after receiving the NFC signal 1. For example, the NFC module 102 may broadcast, to an application on the electronic device 100, a notification indicating that the NFC signal 1 is received.

S202 to S204 are similar to S103 to S105 in FIG. 6A. For details, refer to the descriptions of S103 to S105 in FIG. 6A.

S205: The wallet application 101 of the electronic device 100 learns, from a wireless charging module 103, whether the electronic device 100 is in a wireless charging state.

In an implementation, the wallet application 101 may specifically learn whether the electronic device 100 is in the following wireless charging state in which electronic device 100 is a charged device that receives a charging current, and the electronic device 200 is a charging device that provides a charging current, that is, a state in which the electronic device 200 charges the electronic device 100.

S206: The wallet application 101 of the electronic device 100 determines, based on whether the electronic device 100 is in the wireless charging state, whether to display an NFC card reading interface.

S207: When the electronic device 100 is in the wireless charging state, the wallet application 101 of the electronic device 100 skips displaying the NFC card reading interface; otherwise, displays the NFC card reading interface.

In an implementation, when the electronic device 100 is in a wireless charging state (for example, the wireless charging state described in S205), it may be considered that the electronic device 100 is in a specific scenario. The specific scenario may exclude a scenario in which the user uses another key, for example, exclude a scenario in which the user uses a digital key like an access card or a transit card; for another example, exclude a scenario in which the user uses another digital key when the user is far away from the electronic device 200 (in this scenario, the electronic device 200 cannot charge the electronic device 100). In this way, false card pop-up in the specific scenario in which the NFC signal 1 is received can be accurately suppressed.

In another implementation, when the electronic device 100 is not in the wireless charging state (for example, the wireless charging state in S205), it may be considered that the electronic device 100 is not in the foregoing specific scenario, and the user may use an NFC key. In this case, the electronic device 100 may display the NFC card reading interface. This can avoid affecting normal card use experience of a digital key like an access card.

S208: The NFC module 201A of the electronic device 200 determines, based on the NFC signal 2, to initiate NFC key authentication.

S209: The NFC module 201A of the electronic device 200 sends an NFC signal 3 (including an AID 1) to the NFC module 102 of the electronic device 100.

S210: The NFC module 102 of the electronic device 100 sends a corresponding notification to the wallet application 101 after receiving the NFC signal 3. For example, the NFC module 102 may broadcast, to the application on the electronic device 100, a notification indicating that the NFC signal 3 is received.

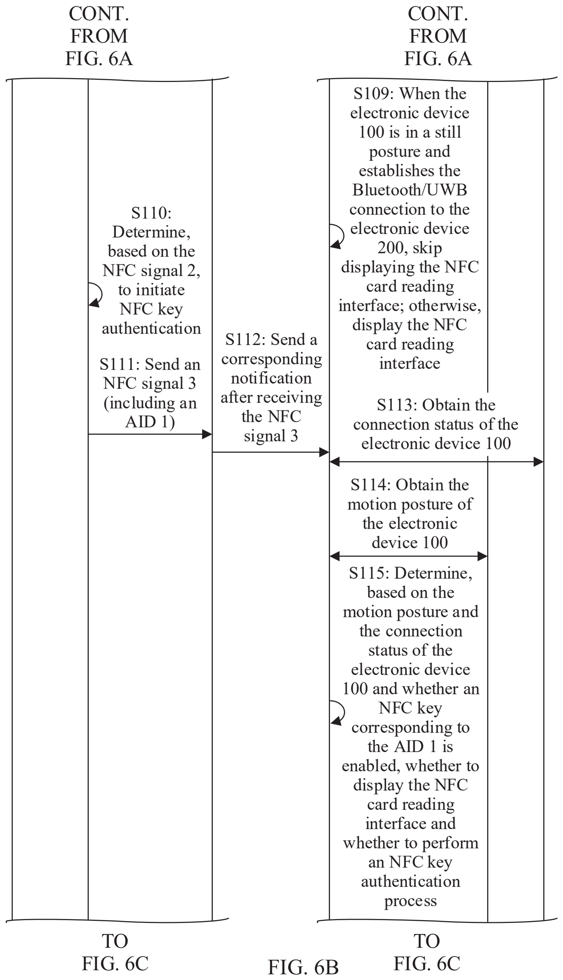

S208 to S210 are similar to S110 to S112 in FIG. 6B. For details, refer to the descriptions of S110 to S112.

S211: The wallet application 101 of the electronic device 100 learns, from the wireless charging module 103, whether the electronic device 100 is in the wireless charging state.

For a description of S211, refer to the description of S205. A difference lies in that S205 is performed after the wallet application 101 receives a notification indicating that the NFC signal 1 enters a field, and S211 is performed after the wallet application 101 receives a notification indicating that the NFC signal 3 enters a field.

S212: The wallet application 101 of the electronic device 100 determines, based on whether the electronic device 100 is in the wireless charging state and whether an NFC key corresponding to the AID 1 is enabled, whether to display the NFC card reading interface and whether to perform an NFC key authentication process (for a determining result, refer to Case A and Case B).

S213: In Case A, when the electronic device 100 is in the wireless charging state and the NFC key corresponding to the AID 1 is not enabled, the wallet application 101 of the electronic device 100 skips displaying the NFC card reading interface and skips performing the NFC key authentication process.

In an implementation, when the electronic device 100 is in the wireless charging state, it may be considered that the electronic device 100 is in a specific scenario. The specific scenario may exclude a scenario in which the user uses another key. In the specific scenario, if the electronic device 100 has not enabled the NFC key corresponding to the AID 1, the electronic device 100 may not display the NFC card reading interface, for example, keep an original display interface unchanged, and does not perform an NFC key authentication process with the electronic device 200, for example, does not perform S214 and S215 in Case B.

S214: In Case B, when the electronic device 100 is not in the wireless charging state, and/or the NFC key corresponding to the AID 1 is enabled, the wallet application 101 of the electronic device 100 sends an NFC signal 4 to the NFC module 201A of the electronic device 200 via the NFC module 102.

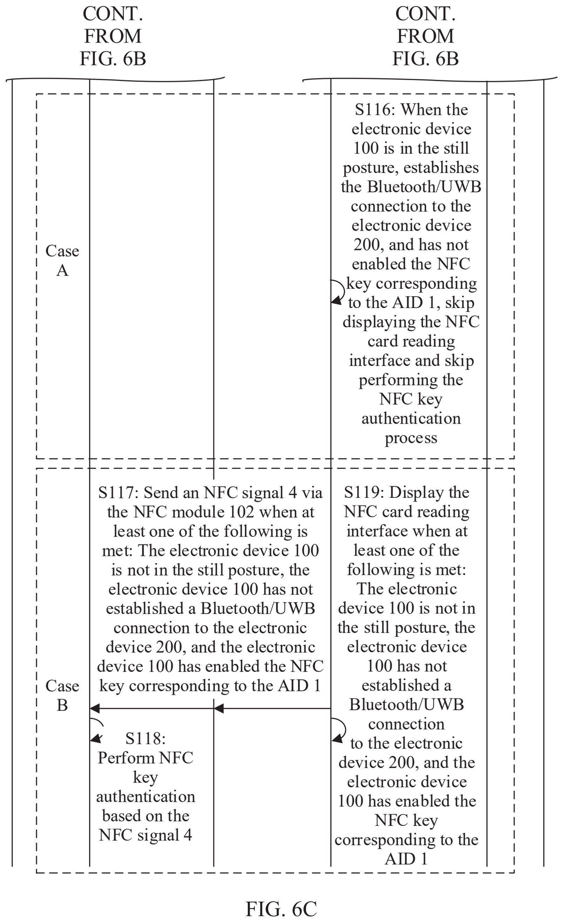

In an implementation, when the electronic device 100 is not in the wireless charging state, and/or the NFC key (which may be referred to as an NFC key 1) corresponding to the AID 1 is enabled, it may be considered that the electronic device 100 is not in a specific scenario and/or the NFC key 1 corresponding to the electronic device 200 exists, and the user may use the NFC key. In this case, the electronic device 100 may perform an NFC key 1 authentication process. For a specific example, refer to the example of S117 in FIG. 6C.

S215: The NFC module 201A of the electronic device 200 performs NFC key authentication based on the NFC signal 4.

S215 is similar to S118 in FIG. 6C. For details, refer to the description of S118 in FIG. 6C.

S216: In Case B, when the electronic device 100 is not in the wireless charging state, and/or the NFC key corresponding to the AID 1 is enabled, the wallet application 101 of the electronic device 100 may display the NFC card reading interface.

S216 is similar to S119 in FIG. 6C. For details, refer to the description of S119 in FIG. 6C.

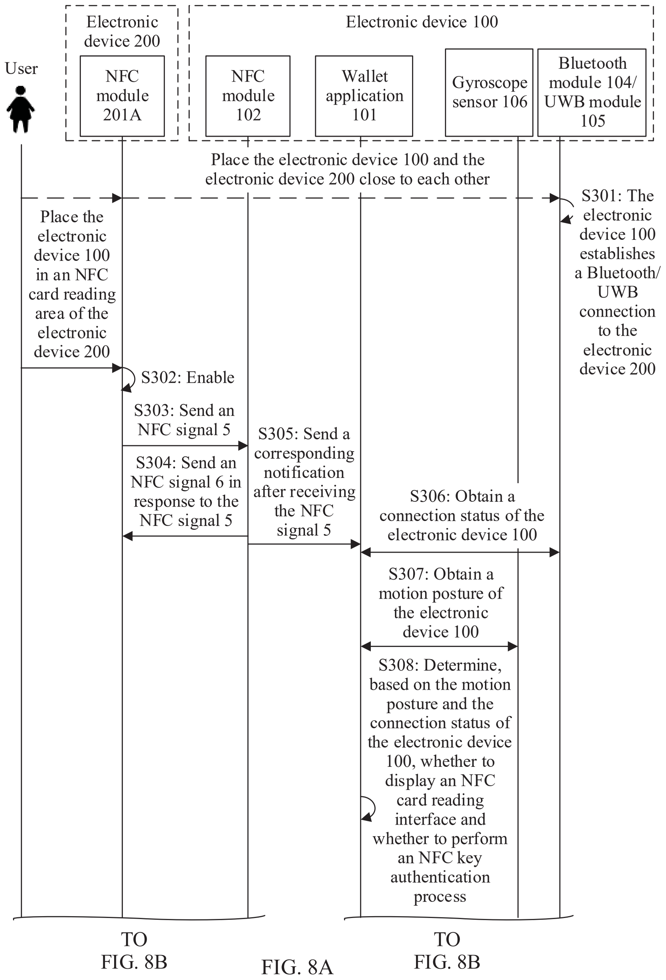

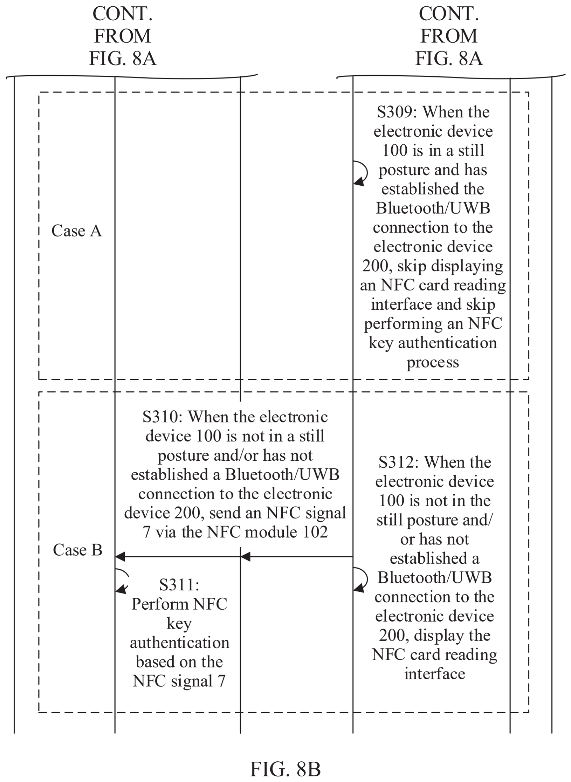

Not limited to embodiments shown in FIG. 6A to FIG. 7C, in some other embodiments, the electronic device 200 may alternatively not send the NFC signal 3. In this case, the NFC signal 1 may be used to initiate NFC key authentication. For a specific procedure example, refer to FIG. 8A and FIG. 8B. FIG. 8A and FIG. 8B are described by using an example in which an electronic device 100 determines, based on a motion posture and a connection status of the electronic device 100, whether to display an NFC card reading interface (corresponding to FIG. 6A to FIG. 6C). Alternatively, the electronic device 100 may determine, based on whether the electronic device 100 is in a wireless charging state, whether to display an NFC card reading interface (corresponding to FIG. 7A to FIG. 7C). A procedure in this case is similar to that in FIG. 8A and FIG. 8B, and details are not described again.

FIG. 8A and FIG. 8B are a schematic flowchart of still another display method according to an embodiment of this application. The method may include but is not limited to the following steps.

S301: When a user places the electronic device 100 close to an electronic device 200, the electronic device 100 and the electronic device 200 may establish a Bluetooth/UWB connection. Optionally, a Bluetooth module 104/UWB module 105 of the electronic device 100 and a Bluetooth module 202/UWB module 203 of the electronic device 200 establish a Bluetooth/UWB connection.

In an implementation, S301 is an optional step. S301 is similar to S101 in FIG. 6A. For details, refer to the description of S101 in FIG. 6A.

S302: When the user places the electronic device 100 in an NFC card reading area of the electronic device 200, an NFC module 201A of the electronic device 200 may be enabled, to transmit an NFC signal.

S303: The NFC module 201A of the electronic device 200 sends an NFC signal 5 to an NFC module 102 of the electronic device 100.

S303 is similar to S103 in FIG. 6A. For details, refer to the description of S103 in FIG. 6A. The NFC signal 5 in S303 corresponds to the NFC signal 1 in S103.

S304: The NFC module 102 of the electronic device 100 sends an NFC signal 6 to the NFC module 201A of the electronic device 200 in response to the NFC signal 5.

S304 is similar to S104 in FIG. 6A. For details, refer to the description of S104 in FIG. 6A. The NFC signal 6 in S304 corresponds to the NFC signal 2 in S104.

S305: The NFC module 102 of the electronic device 100 sends a corresponding notification to a wallet application 101 after receiving the NFC signal 5. For example, the NFC module 102 may broadcast, to an application on the electronic device 100, a notification indicating that the NFC signal 5 is received.

S306: The wallet application 101 of the electronic device 100 obtains a connection status of the electronic device 100 from the Bluetooth module 104/UWB module 105.

S307: The wallet application 101 of the electronic device 100 obtains a motion posture of the electronic device 100 from a gyroscope sensor 106.

S306 and S307 are similar to S106 and S107 in FIG. 6A. For details, refer to the descriptions of S106 and S107 in FIG. 6A.

S308: The wallet application 101 of the electronic device 100 determines, based on the motion posture and the connection status of the electronic device 100, whether to display an NFC card reading interface and whether to perform an NFC key authentication process (for a determining result, refer to Case A and Case B).

S309: In Case A, when the electronic device 100 is in a still posture and has established the Bluetooth/UWB connection to the electronic device 200, the wallet application 101 of the electronic device 100 skips displaying the NFC card reading interface and skips performing an NFC key authentication process.

In an implementation, when the electronic device 100 is in a still posture and has established a Bluetooth/UWB connection to the electronic device 200, it may be considered that the electronic device 100 is in a specific scenario. The specific scenario may exclude a scenario in which the user uses the NFC key. In this case, the electronic device 100 may not display the NFC card reading interface, for example, keep an original display interface unchanged, and does not perform an NFC key authentication process with the electronic device 200, for example, does not perform S310 and S311 in Case B.

S310: In Case B, when the electronic device 100 is not in a still posture and/or has not established a Bluetooth/UWB connection to the electronic device 200, the wallet application 101 of the electronic device 100 sends an NFC signal 7 to the NFC module 201A of the electronic device 200 via the NFC module 102.

In an implementation, when the electronic device 100 is not in the still posture (that is, in a moving state) and/or has not established a Bluetooth/UWB connection to the electronic device 200, it may be considered that the electronic device 100 is not in a specific scenario, and the user may use the NFC key. In this case, the electronic device 100 may perform an NFC key authentication process. In some examples, the electronic device 100 may send the NFC signal 7 including information about the NFC key to the electronic device 200. In a case, the NFC key may be requested by the electronic device 200. For example, the NFC signal 5 includes an identifier (for example, an AID) of the NFC key, so that the electronic device 100 determines the NFC key, and sends the information about the NFC key to the electronic device 200. In another case, the NFC key may alternatively be automatically identified by the electronic device 100. For example, the electronic device 100 identifies the NFC key based on a type of the electronic device 200. In some other examples, when the electronic device 100 has not enabled or obtained an NFC key corresponding to the electronic device 200, the electronic device 100 may not send the information about the NFC key in the NFC signal 7. For example, the NFC signal 7 indicates that the NFC key is not enabled/obtained.

S311: The NFC module 201A of the electronic device 200 performs NFC key authentication based on the NFC signal 7.

S311 is an optional step. S311 is similar to S118 in FIG. 6C. For details, refer to the description of S118 in FIG. 6C. The NFC signal 7 in S311 corresponds to the NFC signal 4 in S118.

S312: In Case B, when the electronic device 100 is not in the still posture and/or has not established a Bluetooth/UWB connection to the electronic device 200, the wallet application 101 of the electronic device 100 may display the NFC card reading interface.

In an implementation, when the electronic device 100 is not in the still posture (that is, in a moving state) and/or has not established a Bluetooth/UWB connection to the electronic device 200, it may be considered that the electronic device 100 is not in the foregoing specific scenario, and the user may use the NFC key. In this case, the electronic device 100 may display the NFC card reading interface. For descriptions of displaying the NFC card reading interface by the electronic device 100, refer to the descriptions of displaying the NFC card reading interface in S109 in FIG. 6B. The NFC key displayed by the electronic device 100 in the NFC card reading interface may be the NFC key indicated by the NFC signal 7.

For example, the NFC key shown in FIG. 6A to FIG. 7C is a vehicle key, and the electronic device 200 is a vehicle. The NFC key shown in FIG. 8A and FIG. 8B is a door key or a payment key (for example, an electronic bank card or an electronic transit card).

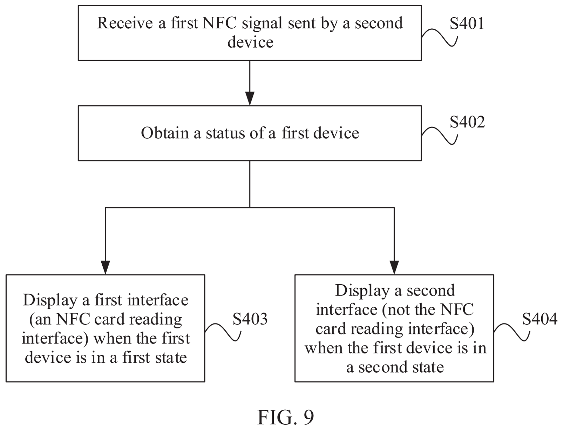

FIG. 9 is a schematic flowchart of yet another display method according to an embodiment of this application. The method may include but is not limited to the following steps.

S401: A first device (namely, the electronic device 100) receives a first NFC signal sent by a second device (namely, the electronic device 200).

In an implementation, the first NFC signal is the NFC signal 1 in FIG. 6A to FIG. 6C or FIG. 7A to FIG. 7C. In another implementation, the first NFC signal is the NFC signal 5 in FIG. 8A and FIG. 8B. For example, the first NFC signal is used to wake up an NFC module of the first device.

S402: The first device obtains a status of the first device.

In an implementation, the first device may detect the status of the first device, for example, detect the status of the first device via a sensor module, a camera, a communication module, or the like of the first device. In another implementation, the first device may alternatively obtain the status of the first device from another device (for example, a device connected to the first device). The status of the first device includes, for example, but is not limited to, whether the first device performs wireless charging with another device, a motion posture (for example, including a rotation posture, a translation posture, and a still posture) of the first device, a relative location of the first device and another device (which may represent a relative motion status of the first device and the another device), and a connection status with another device.

In an implementation, the first device may determine, based on the obtained status of the first device, whether to display the NFC card reading interface. For details, refer to S403 and S404.

S403: When the first device is in a first state, the first device displays a first interface (the NFC card reading interface).

S404: When the first device is in a second state, the first device displays a second interface (not the NFC card reading interface).

In an implementation, the first state is different from the second state, and the first interface is different from the second interface. The second state is related to the second device. When the first device is in the second state, a distance between the first device and the second device is less than or equal to a first distance (for example, a distance between the first device and an NFC card reading area of the second device is less than or equal to the first distance), and a motion status of the first device relative to the second device is a stationary state. The second state may be understood as a state in which the first device keeps close to the second device (for example, the NFC card reading area of the second device). In addition, the second state is a state in which the first device and the second device perform NFC communication for a plurality of times. When the first device is in the second state, the second device sends the first NFC signal to the first device for a plurality of times (for example, periodically). If the first device does not perform the display method provided in this application, each time after receiving the first NFC signal, the first device displays the NFC card reading interface. If the first device performs the display method provided in this application, each time after receiving the first NFC signal, the first device determines whether to display the NFC card reading interface.

That the motion status of the first device relative to the second device is the stationary state means that the first device and the second device remain relatively stationary and do not move relative to each other. For example, the first device is a mobile phone, the second device is a vehicle, and the first device is horizontally placed in the NFC card reading area of the second device. When the second device is in a traveling state, although the first device moves synchronously (moves relative to the ground) with movement of the second device, a relative location of the first device and the second device remains unchanged. The first device is always placed horizontally in the NFC card reading area of the second device, and is not flipped, picked up, or the like.

In some examples, the second state includes: The first device is connected to the second device in a first short-range communication manner (for example, a first digital key of the first device is connected to the second device), and the motion posture of the first device is a still posture. In this case, the first state includes: The first device is not connected to the second device in the first short-range communication manner, and/or the motion posture of the first device is not the still posture. The first short-range communication manner is different from an NFC communication manner, for example, but is not limited to Bluetooth, UWB, Sparklink, infrared, and the like. The first digital key corresponds to the first short-range communication manner, for example, but is not limited to a digital key like a Bluetooth key, a UWB key, a Sparklink key, or an infrared key. In this case, for descriptions of S401 to S404, refer to the descriptions of S103 to S109 in FIG. 6A and FIG. 6B or the descriptions of S303 to S312 in FIG. 8A and FIG. 8B. The motion posture of the first device is a posture in which the first device moves in space in which the first device is located, for example, including a rotation posture, a translation posture, and a still posture (that is, keeping stationary).

It may be understood that, considering that there is a specific error when detecting the motion status of the first device relative to the second device (for example, detection is performed via a gyroscope sensor, an infrared module, or the like), and considering actual application scenarios of the first device and the second device, that the motion status of the first device relative to the second device is the stationary state does not mean that change amplitude of a relative location of the first device and the second device is 0, and that the change amplitude of the relative location of the first device and the second device is less than a specific range (for example, 1 millimeter) (for example, the first device translates in the NFC card reading area of the second device) may be understood as that the motion status of the first device relative to the second device is the stationary state, that is, a relative location of the first device and the second device remains unchanged (which may also be referred to as being relatively stationary). Similarly, that the motion posture of the first device is the still posture does not mean that change amplitude of a location of the first device is 0. That the change amplitude of the location of the first device is less than a specific range (for example, the first device translates in the NFC card reading area of the second device) may be understood as that the motion posture of the first device is the still posture. However, when the motion posture of the first device is the still posture, the first device does not perform a motion like rotation.

In some other examples, the second state includes a state in which the first device performs wireless charging via the second device (which may also be referred to as a state in which the second device charges the first device), that is, a wireless charging state in which the first device serves as a charged device that receives a charging current/charging input and the second device serves as a charging device that provides a charging power supply/charging input. Optionally, in this case, the NFC card reading area of the electronic device 200 and a wireless charging area are integrated together. In this case, for descriptions of S401 to S404, refer to the descriptions of S202 to S207 in FIG. 7A.

In an implementation, in S403, when the first device is in the first state, the first device may display the NFC card reading interface, and the first device and the second device may perform an authentication process of a first NFC key of the first device (for example, the first device sends a second NFC signal including information about the first NFC key to the second device, so that the second device performs authentication). In S404, when the first device is in the second state, the first device may not display the NFC card reading interface, and the first device does not perform an NFC key authentication process with the second device (for example, the first device does not send information about the NFC key of the first device to the second device). In this case, for descriptions of S403, refer to the descriptions of S310 to S312 in Case B in FIG. 8B. For descriptions of S404, refer to the descriptions of S309 in Case A in FIG. 8B.

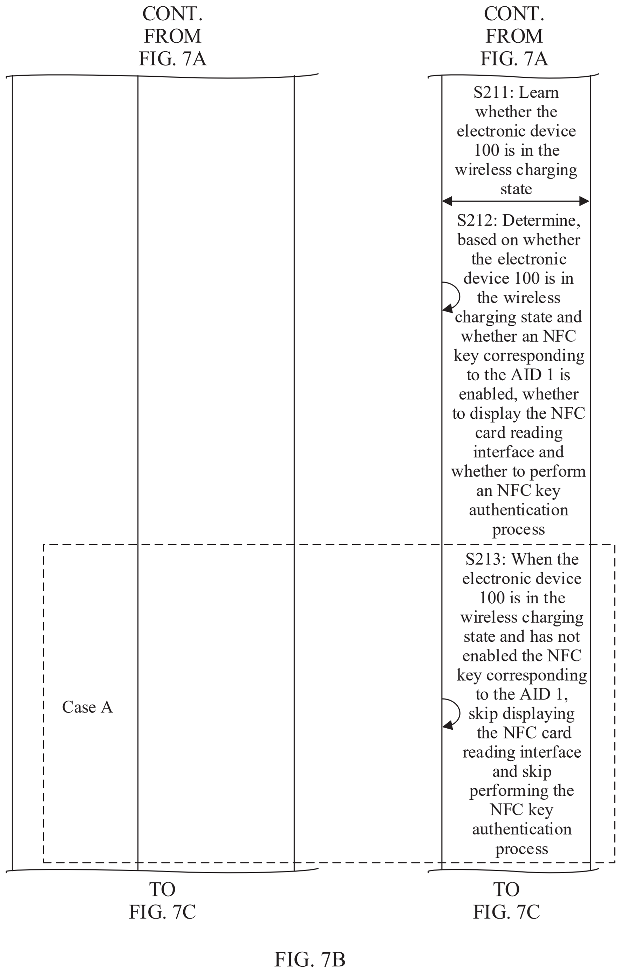

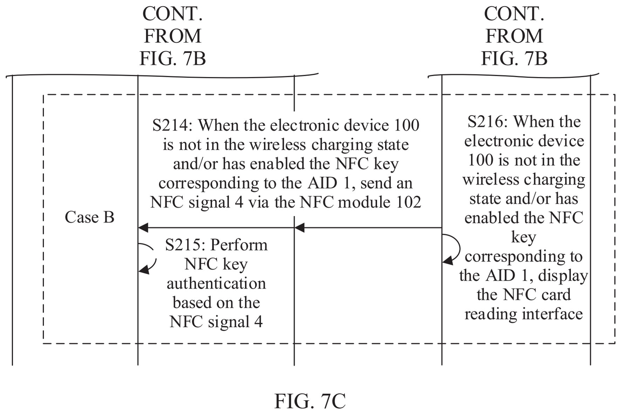

In another implementation, after S401, for example, after S403 or S404, the method further includes: The first device receives a third NFC signal (including a first identifier) sent by the second device, and then obtains the status of the first device; and the first device may determine, based on the status of the first device, whether to display the NFC card reading interface and whether to perform an NFC key authentication process. When the first device is in the first state and/or has enabled a second NFC key corresponding to the first identifier, the first device and the second device perform an NFC key authentication process (for example, the first device sends a fourth NFC signal including information about a third NFC key to the second device, so that the second device performs authentication), and the first device displays the NFC card reading interface. When the first device has enabled the second NFC key corresponding to the first identifier, the third NFC key is the second NFC key. When the first device has not enabled the second NFC key, the third NFC key does not correspond to the first identifier. When the first device is in the second state and has not enabled the NFC key corresponding to the first identifier, the first device does not perform an NFC key authentication process with the second device (for example, the first device does not send the information about the NFC key of the first device to the second device), and the first device does not display the NFC card reading interface. In this case, for descriptions of the first device in the first state, refer to the descriptions of S117 to S119 in Case B in FIG. 6C. For descriptions of the first device in the second state, refer to the descriptions of S116 in Case A in FIG. 6C. Alternatively, for descriptions of the first device in the first state, refer to the descriptions of S214 to S216 in Case B in FIG. 7C. For descriptions of the first device in the second state, refer to the descriptions of S213 in Case A in FIG. 7B.

For ease of description, embodiments of this application are described by using a sequence of FIG. 6A to FIG. 6C, FIG. 7A to FIG. 7C, FIG. 8A and FIG. 8B, and FIG. 9, but this is not intended to constitute a limitation that the method is necessarily performed in the foregoing sequence. An execution sequence, an execution time, a quantity of execution times, and the like of the one or more steps are not limited in embodiments of this application. For example, in FIG. 6A to FIG. 6C, a sequence of S104 and S105 is not limited, a sequence of S106 and S107 is not limited, and a sequence of S117 and S119 is not limited.

For ease of description, embodiments of this application are described by using the steps in FIG. 6A to FIG. 6C, FIG. 7A to FIG. 7C, FIG. 8A and FIG. 8B, and FIG. 9, but this is not intended to limit all the foregoing steps being performed. Embodiments of this application may include some or all of the foregoing steps. For example, in FIG. 8A and FIG. 8B, after receiving the second NFC signal sent by the second device, the first device may not obtain the status of the first device, but directly use the status obtained in S402.

All or a part of the method provided in embodiments of this application may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disk, SSD)), or the like. In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A display method, applied to a first device, wherein the method comprises:
receiving a first near field communication NFC signal sent by a second device;
obtaining a status of the first device;
displaying a first interface when the first device is in a first motion state, wherein the first interface is an NFC card reading interface; and
displaying a second interface when the first device is in a second motion state, wherein the first motion state is different from the second motion state, the first interface is different from the second interface, and the second motion state is related to the second device.

2. The method according to claim 1, wherein when the first device is in the second state, a distance between the first device and the second device is less than or equal to a first distance, and a motion status of the first device relative to the second device is a stationary state.

3. The method according to claim 2, wherein
the second state comprises a state in which the first device performs wireless charging via the second device; or
the second state comprises: the first device is connected to the second device in a first short-range communication manner, and a motion posture of the first device is a still posture, wherein the first short-range communication manner is different from an NFC communication manner.

4. The method according to claim 3, wherein the second state comprises: a first digital key of the first device is connected to the second device, the motion posture of the first device is the still posture, and a short-range communication manner corresponding to the first digital key is different from the NFC communication manner.

5. The method according to any one of claims 1 to 4, wherein displaying the first interface when the first device is in the first state comprises:
when the first device is in the first state, sending a second NFC signal to the second device and displaying the first interface, wherein the second NFC signal comprises information about a first NFC key of the first device, and the second NFC signal is used by the second device to authenticate the first NFC key; and
displaying the second interface when the first device is in the second state comprises:
when the first device is in the second state, skipping sending, by the first device, the information about the NFC key of the first device to the second device, and displaying the second interface.

6. The method according to any one of claims 1 to 4, wherein after receiving the first near field communication NFC signal sent by the second device, the method further comprises:
receiving a third NFC signal sent by the second device, wherein the third NFC signal comprises a first identifier;
obtaining the status of the first device;
when the first device is in the first state and/or has enabled a second NFC key corresponding to the first identifier, sending a fourth NFC signal to the second device, and displaying the first interface, wherein the fourth NFC signal comprises information about a third NFC key of the first device, the fourth NFC signal is used by the second device to authenticate the third NFC key, and the third NFC key is the second NFC key when the first device has enabled the second NFC key; and
when the first device is in the second state and has not enabled the NFC key corresponding to the first identifier, skipping sending, by the first device, the information about the NFC key of the first device to the second device, and displaying, by the first device, the second interface.

7. The method according to claim 5, wherein the first NFC key is a door key or a payment key.

8. The method according to claim 6, wherein the second NFC key or the third NFC key is a vehicle key.

9. The method according to claim 4, wherein the first digital key is a Bluetooth key, an ultra-wideband UWB key, a Sparklink key, or an infrared key.

10. An electronic device, comprising a transceiver, a processor, and a memory, wherein the transceiver comprises an NFC module, the memory is configured to store a computer program, and the processor invokes the computer program to perform the method according to any one of claims 1 to 9.

11. A computer storage medium, wherein the computer storage medium stores a computer program, and when the computer program is executed by a processor, the method according to any one of claims 1 to 9 is implemented.
